Europäisches Patentamt

European Patent Office

Office européen des brevets

(11) Publication number : **0 509 970 A1**

# (12) EUROPEAN PATENT APPLICATION

(21) Application number : 92830183.7

(22) Date of filing : 14.04.92

(51) Int. Cl.⁵ : **F16L 37/084,** F16L 25/00, A47L 9/24, H02G 3/06

PRIORITY 170491 ITU TO91000090.

(30) Priority : **17.04.91 IT TO910090 U**

(43) Date of publication of application :
**21.10.92 Bulletin 92/43**

(84) Designated Contracting States :
**DE ES FR GB IT**

(71) Applicant : **ELEDRO KLITZ S.p.A.**
**Via Ligiard 5**
**I-10060 Cantalupa (Torino) (IT)**

(72) Inventor : **Rivero, Davide**
**Via Roma 31**
**I-12029 S. Damiano Macra (Cuneo) (IT)**

(74) Representative : **Gerbino, Angelo et al**
**C/O JACOBACCI-CASETTA & PERANI S.p.A.,**
**Via Alfieri 17**
**I-10121 Torino (IT)**

(54) **A device for connecting an end of a corrugated tube inside a hollow terminal.**

(57)    The device includes an annular element (8) having an inner surface with a profile corresponding to that of the outer corrugated surface of the tube (2) and an average diameter substantially equal to that of the tube (2), the annular element (8) being cut along one of the generatrices (12) of its surface to enable it to be fitted onto the end of the corrugated tube (2), the annular element (8) and/or the terminal (4) also having at least one projection (16) which resiliently engages a corresponding seat (6) in the terminal (4) and/or in the annular element (8).

FIG. 2

EP 0 509 970 A1

The present invention relates to a device for connecting one end of a corrugated tube inside a hollow terminal.

By corrugated tube is meant a tube with a continuous helical groove or a plurality of substantially parallel circumferential grooves in its outer surface. Such tubes have various applications, for example, as coverings for electrical cables or, when mounted coaxially around pipes carrying fluids, as safety devices which prevent the fluid from escaping in the event of a rupture of the pipe.

The object of the present invention is to provide a device of the type indicated above which can be produced simply and cheaply and which enables the connection to be made quickly and easily.

This object is achieved by virtue of a device of the type indicated above, characterised in that it includes an annular element having an inner surface with a profile corresponding to that of the outer corrugated surface of the tube and an average diameter substantially equal to that of the tube, the annular element being cut along one of the generatrices of its surface to enable it to be fitted onto the end of the corrugated tube, the annular element and/or the terminal also having at least one projection which resiliently engages a corresponding seat in the terminal and/or the annular element.

The ability of the corrugated tube and of the ring fitted thereon to be deformed resiliently radially is utilised in order to fit the corrugated tube in the terminal and to engage the projections in their seats.

In a preferred embodiment of the invention, the annular element has a film hinge substantially diametrally opposite its cut generatrix for facilitating the fitting of the annular element onto the tube.

Advantages and characteristics of the present invention will become clear from the detailed description which follows with reference to the appended drawing, provided purely by way of non-limiting example, in which:

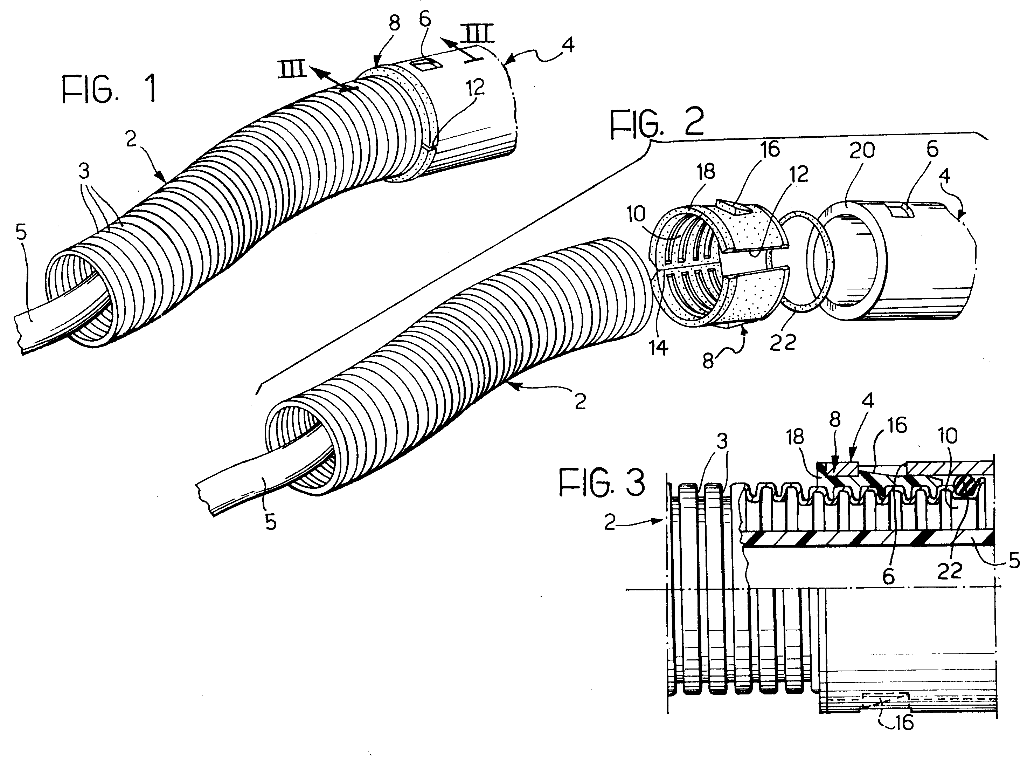

Figure 1 is a perspective view of a device according to the invention in its mounted position in which it connects a corrugated tube to a terminal,

Figure 2 is an exploded perspective view of the elements shown in Figure 1, and

Figure 3 is a section taken on the lines III-III of Figure 1.

With reference to the drawing, a corrugated tube 2 with a plurality of substantially parallel circumferential grooves 3 on its outer surface is disposed around a flexible pipe 5 for carrying a fluid under pressure and thus acts as a safety device for preventing the fluid from escaping in the event of a rupture of the pipe 5.

The corrugated tube 2 is connected to a hollow tubular terminal 4 having a pair of substantially diametrally-opposed holes 6 by a connecting device comprising an annular element 8. The element 8 has an inner surface 10 the profile of which corresponds to that of the corrugated outer surface of the tube 2 and has an average diameter substantially equal to -that of the tube 2.

The annular element 8 is cut along one of the generatrices 12 of its surface and has a film hinge 14 substantially diametrally opposite the generatrix 12.

The outer surface of the annular element 8 has two diametrally-opposed projections 16 of right-angled-triangular cross-section. The annular element 8 also has a shoulder 18 at one end.

In order to connect the tube 2 to the terminal 4, the annular element 8 is first fitted onto one end of the tube 2, utilising the deformability conferred thereon by the film hinge 14. The end of the tube 2 onto which the annular element 8 is fitted is then inserted in the terminal 4. In fact, by virtue of their resilience and that of the terminal 4, the annular element 8 and the tube 2 can bend radially inwardly, facilitating their insertion. The tube 2 is inserted into the terminal 4 until the projections 16 resiliently engage their seats, which are constituted by the holes 6 in the terminal 4. The engagement of the projections 16 in their seats 6 is facilitated by the shapes of the projections 16 which are of right-angled-triangular cross-sections with hypotenuse facing the terminal 4.

When the projections 16 are engaged in their holes 6, the shoulder 18 of the annular element 8 abuts the end surface 20 of the terminal 4 and a sealing ring 22 fitted in one of the grooves 3 of the tube 2 forms a seal between the latter and the terminal 4.

The tube 2 is thus connected to the terminal 4 extremely easily and quickly as a result of a single engagement operation. The tube 2 can also be disconnected from the terminal 4 by the exertion of a certain pressure on the projections 16, for example, with a screwdriver or a similar tool, to release them from the holes 6 and enable the tube 2 to be removed from the terminal 4.

In one alternative embodiment of the invention, not shown in the enclosed figures, the annular element has a cut along one generatrix and two film hinges substantially parallel thereto.

## Claims

1. A device for connecting one end of a corrugated tube (2) inside a hollow terminal (4), characterised in that it includes an annular element (8) having an inner surface with a profile corresponding to that of the corrugated outer surface of the tube (2) and an average diameter substantially equal to that of the tube (2), the annular element (8) being cut along one of the generatrices (12) of its surface to enable it to be fitted onto the end of the corrugated tube (2), the annular element (8) and/or the terminal (4) also having at least one projection (16) which resiliently engages a corresponding seat (6) in the terminal (4) and/or in the annular element (8).

2. A device according to Claim 1, characterised in that the annular element (8) has a film hinge (14) substantially diametrally opposite the cut generatrix (12) for facilitating the fitting of the annular element (8) onto the tube (2).

3. A device according to Claim 1, characterised in that, as well as the cut generatrix (12), the annular element (8) also has two film hinges (14) substantially parallel to the cut generatrix (12).

4. A device according to any one of the preceding claims, characterised in that the annular element (8) has two diametrally-opposed projections (16) on its outer surface for engaging respective seats (6) in the terminal (4).

5. A device according to any one of the preceding claims, characterised in that the at least one projection (16) has a right-angled-triangular cross-section, the hypotenuse of which faces the terminal (4) so as to facilitate the engagement of the projection (16) in its seat (6).

6. A device according to any one of the preceding claims, characterised in that one end of the annular element (8) has a shoulder (18) which abuts the end surface (20) of the terminal (4) when the at least one projection (16) is engaged in its seat (6).

7. A device according to any one of the preceding claims, characterised in that a sealing ring (22) is disposed in one of the grooves in the corrugated tube (2) which are intended to be inserted in the terminal (4).

FIG. 1

FIG. 2

FIG. 3

European Patent Office

**EUROPEAN SEARCH REPORT**

Application Number

EP    92 83 0183

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-1 363 045 (HOOVER LTD.)<br>* page 2, left column; figures 1,2 *<br>--- | 1,2,4 | F16L37/084<br>F16L25/00<br>A47L9/24<br>H02G3/06 |
| X | DE-A-2 142 068 (VORWERK & CO.)<br>* page 8 - page 11; figures * | 1,2,4 | |
| A | | 6 | |
| | --- | | |
| Y | BE-A-886 771 (SERVICE DE LA PROPRIETE IND.)<br>* page 2, line 6 - page 2, line 21; figures *<br>--- | 1,4-7 | |
| Y | EP-A-0 378 119 (DÜPRO AG)<br>* column 3, line 30 - column 4, line 44; figures * | 1,4-7 | |
| | ----- | | |

TECHNICAL FIELDS SEARCHED (Int. Cl.5 )

F16L
A47L
H02G

The present search report has been drawn up for all claims

| Place of search | Date of completion of the search | Examiner |
|---|---|---|
| THE HAGUE | 29 JULY 1992 | NEUMANN E. |

EPO FORM 1503 03.82 (P0401)